# EUROPEAN PATENT SPECIFICATION

(11) **EP 0 470 493 B1**
(45) Date of publication and mention of the grant of the patent: **25.09.1996**
(21) Application number: 91112842.9
(22) Date of filing: 31.07.1991
(51) Int. Cl.: B01F 15/00

(54) **Mixing apparatus**
Mischapparat
Appareil de mélange

(30) Priority: 07.08.1990 JP 209808/90; 11.12.1990 JP 401347/90
(43) Date of publication of application: 12.02.1992
(73) Proprietor: SHINKO PANTEC CO., LTD., Chuo-ku Kobe 651 (JP)
(72) Inventor: Takata, Kazutaka, Kobe, Hyogo-ken (JP); Kikuchi, Masahiko, Akashi, Hyogo-ken (JP); Ito, Hisayoshi, Takarazuka, Hyogo-ken (JP); Sato, Eisuke, Kobe, Hyogo-ken (JP)
(74) Representative: Türk, Gille, Hrabal, Leifert

(56) References cited:
- EP-A- 0 222 599
- DE-A- 3 334 811
- FR-A- 2 238 527
- US-A- 4 312 596
- US-A- 4 936 688

## Description

The invention relates to a mixing apparatus with the features of the preamble of claim 1, and, more particularly, to a mixing apparatus for efficiently performing such mixing operations as the mixing, dissolution, crystallization, reaction, and slurry suspension.

Various types of impellers are known and have been used in mixing tanks for various applications. When it is required to handle liquid in such a wide viscosity range that the flow in the tank can change from the turbulent to the laminar, there have often been used multiple stage impellers of two-bladed flat paddle type. In most cases of this type of multiple impellers, two impellers adjacent to each other on the mixing shaft are set crosswise, at a right angle to each other, because this arrangement is the most stable from the viewpoints of rotational balance and shaft-bending moment caused from fluctuating hydrodynamic forces acting on the impeller blades (DE-A-33 34 811). This type of mutiple impellers usually has a comparatively wide axial clearance between two impellers adjacent to each other on the shaft in order to decrease the number of impellers required and the total power consumed by all the impellers in the tank.

ln the meantime, the mixing apparatus has been recently demanded to have more efficient and diversified performances so as to apply to the operation for a wide range of mixing conditions.

Particularly, in a batch process, the mixing apparatus is demanded to meet the following diversified purpose and high performances.
(1) Uniform mixing; Complete mixing of liquids can be attained under a wide range of viscosity. And complete and uniform mixing can be attained under the conditions of low to high liquid level in a tank with various fluid viscosity.
(2) Heat-transfer performance; High heat-transfer capacity with low power consumption is obtainable.
(3) Solid-liquid mixing; Various types of solid-liquid mixing such as dispersion of particles with large density difference between particle and fluid, uniform mixing of high-concentration slurry, uniform mixing with a low shear rate and so on can be attained.
(4) Liquid-liquid dispersion; Sharp liquid-drop diameter distribution is obtainable. In addition it is possible to attain uniform liquid-liquid dispersion consistent with the low shear rate and to attain homogeneous light-liquid dispersion whose viscosity is increased by reactions.

The present inventors investigated whether conventional mixing apparatus equipped with a multistage impellers system could satisfy the aforementioned demands. The results of the invenstigations showed that it is not so difficult to choose a mixing apparatus capable of satisfying each of the above-described conditions. However, it is very difficult to select specifications capable of simultaneously satisfying many items of the aforementioned conditions, since these prior-art mixing apparatus have the following problems. Accordingly, the use of a mixing apparatus newly improved or developed will become necessary in order to meet the aforementioned demands.

ln a mixing apparatus equipped with two-bladed paddle impellers on a shaft at a crossing angle of 90 degrees apart from each other, which is described in prior art as a conventional type, the streamlines formed by the discharged flow from each impeller do not sufficently link under the adequate pressure gradient between each impeller region. Therefore, the segregation of the fluid in the tank occurs in the region between the upper and the lower impeller, and a stagnant point (dead space) of the fluid occurs in the tank, and these phenomena reduce the efficencies of mixing performances. The formation of the dead space not only reduces the heat-transfer performance of the fluid but burn and stick and contamination are liable to be caused on the inner wall surface of the tank, and therefore they reduce the mixing efficiencies.

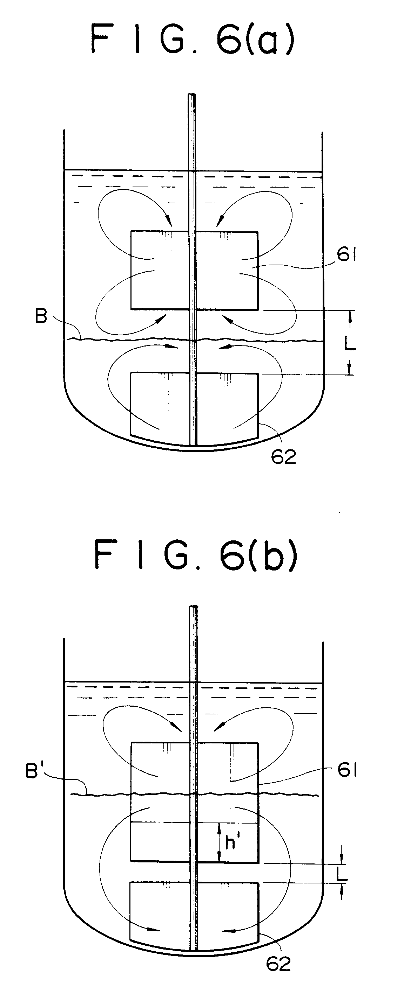

When a mixing apparatus with flat-blade impellers such as paddle impellers is used, a number of circulating flows are generated in the tank by the rotation of the impellers. These phenomena become more typical when a clearance L between upper and lower impellers is kept as large as shown in Fig. 6(a). In such a case, since the boundary B is generated by the interference of the circulating flows, mixing between the upper and lower circulating flows is suppressed. On the contrary, the reduction of the clearance L between the impellers by moving them is considered so as to disappear the interference phenomena between circulating flows. In this case, however, it is necessary to increase the height of either impeller as the same height of reduction (h', shown in the figure) in the impeller clearance L', and this causes an increment of power consumption. Also, in the case of increasing the impeller height, the discharged flow is divided at the center of the impeller, and two circulating flows generate, and the boundary B' attributed to the interference of the circulating flow generates as the same boundary in case of impellers attached with a wide clearance described above. These phenomena disturb the linkage of the fluid in the tank.

However, optimum crossing angle and the clearance between each impeller from the viewpoint of an overall flow pattern in the tank have not been examined theoretically and quantitatively so that it makes difficult to select the specifications for satisfying the above-described demands.

The invention has been accomplished and has its object in order to solve the problems mentioned above, and its particular object is to make in a mixing apparatus a large circulating flow under the adequate pressure gradient between the multiple stage paddle impellers by arranging the paddle impellers to the optimum positions, and therefore mixing efficiency increases by linking up each circulating flow in the mixing tank under all mixing conditions from turbulent to transition flow and further to laminar flow.

In order to accomplish the above-mentioned object, the invention provides a mixing apparatus having the features of claim 1. Preferred improvements of this apparatus are subject matter of the dependent subclaims.

Radial flow is generated by the rotation of the mixing impeller in the mixing tank. In the mixing apparatus equipped with the paddle impellers arranged vertically at multiple stages, the fluid is discharged by each paddle impeller, and therefore, to smoothly link up the number of circulating flows without interference between them is important to obtain a higher mixing efficiency.

When the fluid in the tank is agitated by the paddle impellers vertically arranged at multiple stages, a discharge flow in the radial direction is formed, and at the same time radial flow generated by the rotating impellers flows into upper and lower regions of the impeller and again returns to the center section of the impeller as shown in Fig.6(a). The discharge flows thus formed by these impellers interfere with that caused by the other adjacent impeller, and segregation occurs between the circulating flows by the interference of the discharge flows, and also the discharge flows influence the radial flow from another impeller. The phenomena mentioned above disturb the linkage of the flow of the whole fluid in the mixing tank.

Furthermore, when the impellers are mounted at a crossing angle of 90 degrees which is well known as a conventional type, the mixing apparatus can rotate with good balance, and with mechanically stable condition. Within some viscosity range, however, it will become difficult to smoothly link the flows between the upper and lower impellers, and therefore the linkage of the flow of the entire fluid in the mixing tank will be disturbed.

First, the inventors made particular investigations with respect to a relation between the behavior of a circulating flow formed by each impeller and a crossing angle by using an impeller arrangement with close clearance in which discharge flows are easy to link between upper and lower-stage impellers. The result showed that these circulating flows are affecting the other impellers at a certain phase of rotational delay from the blade, and that the formation of the circulating flow in the tank is greatly influenced by a correlation between the phase of rotational delay and the crossing angle.

That is, it was found that, with the change of the crossing angles of the upper and lower paddle impellers, the vertical arrangement of the pressure rising produced at the front face of these paddle impellers and the pressure dropping produced at the rear face vary in accordance with the change of the crossing angles, and that the most stabilized linkage of the discharge flow from the upper and lower paddle impellers occurs when the crossing angle is selected within a certain range.

From a further detailed investigation of this relationship between the circulating flows and the crossing angle of the impellers , the inventors have reached the conclusion that the formation of circulating flow is difficult to form in the whole mixing tank by the interference of the discharge flows when discharge flows formed by one paddle impeller have flowed towards the high-pressure side at the front face of the other paddle impeller. On the contrary, when the discharge flows flow to the low-pressure side at the rear face of the other paddle impeller, a selective flow flowing from the high-pressure side towards the low pressure side between the upper and lower-stage impeller will be formed without disturbing an adjacent discharge flow, and the flows of the liquid being discharged from these impellers will be able to be properly linked. Therefore, the linkage of a flow pattern in the tank is attained by the optimum pressure gradient, and this result leads to enhancing the mixing efficiency of the fluid.

Also, the inventors have reached the conclusion that the optimum flow pattern for mixing based on the pressure gradient could be obtained by advancing the phase of the upper paddle impeller less than 90 degrees ahead of the lower paddle impeller.

In order to confirm this conclusion the inventors selected paddle impellers vertically arranged at cross angles as a model apparatus, and made numerical simulation and mixing experiments were conducted by using the model mixing apparatus. The effect of such three factors and the mixing characteristic are described in (1), (2) and (3), (1) the crossing angle α of the upper and lower-stage (an advanced angle, in the direction of rotation, of the upper-stage impeller from the reference angle of the lower-stage impeller), (2) a clearance L between the upper and lower-stage impeller, and (3) the discharge force balance between the upper and lower-stage impellers.

The numerical simulation performed consists of numerical analysis of flow and mixing simulation using a result of the flow analysis. First, three-dimensional fluid velocity distribution within the mixing tank was simulated and also time change of concentration distribution of a diffusion material which is thrown from the liquid surface is simulated by using the result of flow computation. This numerical simulation was applied to a laminar flow condition since the numerical analysis of a fluid have a good reliability only in this region.

On the other hand, the mixing experiment was conducted by using large and small mixing tanks, one has 400 mm in inside diameter, 800 mm in height, 80ℓt in capacity, and the other has 200 mm in inside diameter, 400 mm in height, and 10ℓt in capacity. The measurement of a mixing time was conducted by using a decoloring method for removing the color of iodine solution through reduction with sodium thiosulfate. A viscosity of an iodine solution and a sodium thiosulfate solution are adjusted to the same viscosity as a liquid to be mixed, and the mixing time was determined by referring to a photographic strip of a decoloring process.

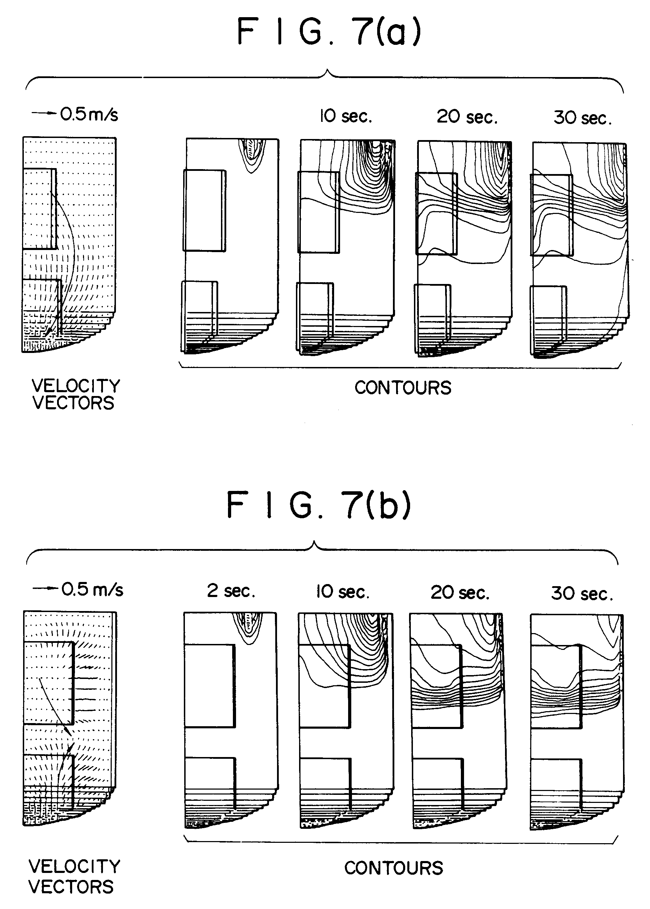

First, (1) the effect of a difference in the crossing angle α between the upper-stage and the lower-stage impellers on the flow and mixing process in the mixing tank was evaluated by using the numerical calculation. In this numerical calculation, 120 mm(0.6D)-diameter paddle impellers are vertically arranged at two stages, with a clearance L of 20 mm (O.1D) in the 200 mm-inside diameter D mixing tank. The viscosity µ of a liquid in the tank is 5Pa·s, the density ρ of 1400 kg/m³ and the mixing Reynolds number Re of 8.4. Numerical calculations were conducted by changing the crossing angle α of the upper- and lower-stage impellers from 0 degrees (the upper and lower-stage impellers are positioned in the same plane) to 90 degrees under common conditions of liquid depth H of 200 mm (1.OD) and an impeller speed of 2.08 rps. Typical examples of the fluid velocity distribution and mixing process obtained from the numerical calculation are shown in Fig. 7.

Fig. 7 shows the velocity vectors in a vertical section of a mixing tank, by its right half and concentration contours indicating the progress of mixing of a diffusion material. Fig.7(a) shows the velocity vectors and the concentration contours at the crossing angle α of 45 degrees, and Fig.7(b) shows the same at the crossing angle α of 0 degree.

When the crossing angle α is 0 degree, discharged flow from the upper and lower paddle impeller meet each other between the impellers, and this flow phenomena disturbs the smooth conveyance of the liquid between the upper and lower parts in the mixing tank. On the other hand, when the crossing angle α is 45 degrees, the liquid conveyance is smoothly promoted from the upper part to the lower part of the mixing tank as shown in the Fig.7(a).

A difference in the mixing process corresponding thereto is as follows. When the crossing angle α is 0 degree, the diffusion material is not conveyed to the lower-stage impeller region after the lapse of 30 seconds after charging the diffusion material. But when the crossing angle is 45 degrees, the diffusion material reaches the bottom region of the tank in a period of 30 seconds after charging the diffusion material. That is, linkage of the discharge flows caused by the upper and lower-stage impellers and the mixing of the fluid in the tank are promoted faster in the case of the blades arranged at the crossing angle of 45 degrees that in the case of the upper and lower paddle impellers arranged in the same plane. As the results of investigations of various crossing angles α made by using this method, the optimum crossing angle α exists ranging from 30 degrees up to less than 90 degrees, and preferably from 45 degrees up to 75 degrees, and the above-described inference is confirmed to be applicable.

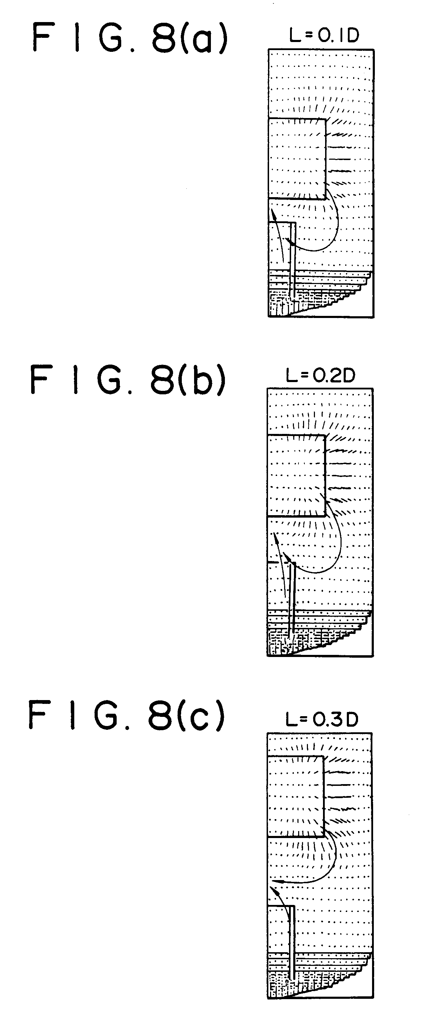

Subsequently, (2) for the purpose of grasping the optimum range of the impeller clearance between the upper and lower-stage impellers, numerical calculation of the flow was conducted with the crossing angle of 45 degrees. Also, the impeller clearance L was changed within the range of from 10% to 30% of the inside diameter D of the mixing tank. The conditions of the numerical calculation were the same as those described above. The velocity distribution obtained by the numerical calculation is shown in Fig. 8.

Fig. 8 shows the velocity vectors in the right half of a vertical section of the mixing tank. In Fig.8, Fig.8(a) shows an example of the impeller clearance L set at O.1D (10%), Fig.8(b) shows an example of the impeller clearance L set to 0.2D (20%), and Fig.8(c) shows an example of the impeller clearance L set to 0.3D (30%). The ratio of the flow rate of flows into the lower paddle impeller region to a flow being discharged by the upper paddle impeller decreases with increasing the clearance L from O.1D to 0.3D, as shown in Fig. 8. When the impeller clearance L equals 0.3D, the flow discharged by the upper paddle impeller is pushed backward by the discharge flow of the lower paddle impeller LP without flows into the lower paddle impeller region. In the meantime, at the impeller clearance L of less than 0.2D, the discharge flow from the upper paddle impeller flows into the lower paddle impeller region, and this means the linkage of the flow. Accordingly, high-efficiency mixing based on the linkage of the flows between upper and lower impeller regions in the mixing tank can be attained by setting the impeller clearance L less than 0.2D, and preferably set to 0.1D.

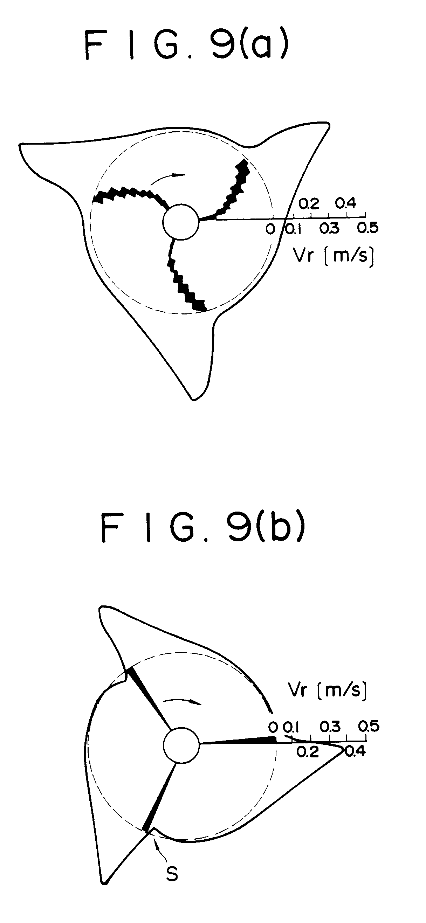

Furthermore, to perform high-efficiency mixing by use of a multistage impeller structure, (3) the discharge force balance between the upper and lower-stage impeller is important. In this examination, investigations on the discharge force balance were made in laminar and turbulent flow ranges by using a retreated paddle impeller setting at the lowermost stage in order to increase discharge flow in the lower part of the mixing tank. This improvement for this apparatus leads to both the applicability in the wider viscosity range and the increase of power efficiency. ln the case of a mixing apparatus with three-impeller type, the numerical calculation of the laminar flow was made using conventional straight paddle impellers and retreated impellers in order to examine the velocity distribution of the discharge flow in radial direction at around, and a result of the analysis is shown in Fig. 9.

Fig. 9 (a) shows the velocity distribution of the discharge flow in radial direction around the retreated impeller, while (b) shows the distribution of the discharge flow in radial direction around a conventional straight paddle impeller.

As shown in Fig. 9, when a retreated impeller is used, there appears no backward flow S of liquid at the rear face of the impeller tip which is often likely to occur in case of a straight paddle impeller, and the liquid is discharged throughout a wide range of angles in tangential direction. Also, the maximum discharge flow velocity is 30% greater than that of the straight paddle impeller when the impeller diameters are the same.

On the other hand, since the velocity of the discharge flow for the paddle impellers depends on the outside diameter (impeller span) thereof, the discharge force in the lower part of the mixing tank can be increased by using a large-span paddle impeller at the lowermost stage than the other paddle impeller positioned at the upper stage.

ln the laminar flow range of over the viscosity of 2Pa·s, mixing could be done well throughout the interior of the mixing tank by use of multistage paddle impellers mounted both at the crossing angle α of 45 degrees and at the blade clearance L of O.1D determined according to the above-described optimum conditions. In the transition region where the flow changes from laminar flow to turbulent flow, however, the linkage of flows between the upper and lower-stage impellers becomes unstabilized, and segregation occurs. Therefore, this causes delay of mixing time.

As result of investigations made for solving the above-mentioned problem, the flows of fluid discharged from these paddle impellers allowed to direct into the rotational zone of the adjacent paddle impellers can be linked well by overlapping at least the outer edge part of the vertically adjacent paddle impellers in the vertical direction, thereby enabling linkage of flow patterns caused by the optimum pressure gradient and improvements in mixing efficiency in mixing a fluid in a transition flow zone and to a laminar flow zone.

For the purpose of confirming the effect thereof, strip-type fins are attached in the lower end part on both outer sides of the upper paddle impellers, projecting downward to overlap the lower paddle impellers, and by using this impeller structure, mixing of a liquid was performed with the viscosity of less than 2Pa·s under the above-described conditions.

The result shows that the rapid mixing is attained stabilized mixing with flows of liquid caused by the upper and lower paddle impellers by the effect of the fins installed in the lower end part on both outer sides of the upper paddle impeller. Also it was confirmed that the provision of the fins in the lower end part on both outer sides of the upper paddle impeller enables not only uniform satisfactory mixing in both the transient flow and the turbulent flow region but better mixing in the laminar flow zone as compared with mixing apparatus without fins.

The mixing apparatus according to the present invention has been accomplished on the basis of various conditions determined by the above-described surveys. That is, rapid mixing is realized with the flows caused by the upper and lower-stage impellers linked by vertically mounting a plurality of paddle impellers at multiple stages attached to a rotating shaft. Each paddle impeller is attached at an upper stage and advanced in the direction of rotation with the crossing angle of under 90 degrees in relation to a vertically adjacent lower paddle impeller.

Furthermore, more rapid and reliable mixing can be assured by linking of the discharged flows from the upper and lower-stage impellers with the crossing angle set to 45 to 75 degrees.

Furthermore, the outer edge part of the lowermost paddle impeller is retreated to increase the discharge flow in the lower part of the mixing tank. By using the retreated impeller, the linkage of flow patterns of the whole liquid in the mixing tank is improved, and these effects lead the applicability of the apparatus to various viscosities and power efficiency.

Furthermore, a greater discharge force in the lower part of the mixing tank is attained by increasing the span of the lowermost paddle impeller larger than the other paddle impellers located in the upper stage, and this leads the stabilized linkage of flow patterns of the entire fluid in the turbulent flow region in the mixing tank.

Furthermore, the impeller clearance between the adjacent upper and lower paddle blades was set at less than 20% of the inside diameter of the mixing tank, thereby more difficult mixing based on stabilized linkage of flows caused by the upper and lower-stage impeller is attained.

Furthermore, reliable and stabilized linkage of flows of fluid in the transition region caused by the upper and lower-stage impellers is attained by overlapping the upper and lower adjacent paddle impellers at least in the vertical direction at the outer edge part, thereby good, and uniform mixing of the fluid in the transition region is attained.

The present invention will become more fully understood from the detailed description given hereinbelow and the accompanying drawings which are given by way of illustration only, and thus are not limitative of the present invention, wherein
Fig. 1 shows a mixing apparatus of a first embodiment according to the present invention, in which (a) is a partially cutaway view in perspective of the mixing apparatus and (b) is a sectional view taken along line B-B of (a),
Fig. 2 shows velocity vectors of flows and concentration response curves in the mixing tank of the first embodiment,
Fig. 3 is a partially cutaway view in perspective of a mixing apparatus of another embodiment according to the present invention,
Fig. 4 is a view explaining the overlap form of impellers according to the present invention,
Fig. 5 shows a mixing apparatus of a further embodiment, in which (a) is a front sectional view and (b) is a cross sectional view taken along line B-B of (a),
Fig. 6 is a typical view for explaining the relation between the impeller clearance and the circulation flow in the mixing apparatus with vertically arranged multistage paddle impellers,
Fig. 7 shows the velocity vectors in the mixing apparatus in relation with a crossing angle according to the present invention, and also shows concentration contours expressing the progress of reduction decoloration,
Fig. 8 shows the velocity vectors in the mixing apparatus in relation with the impeller clearance according to the present invention, and
Fig.9 shows the velocity distribution of the discharge flow in radial direction around retreated impellers, and also shows around straight paddle impellers.

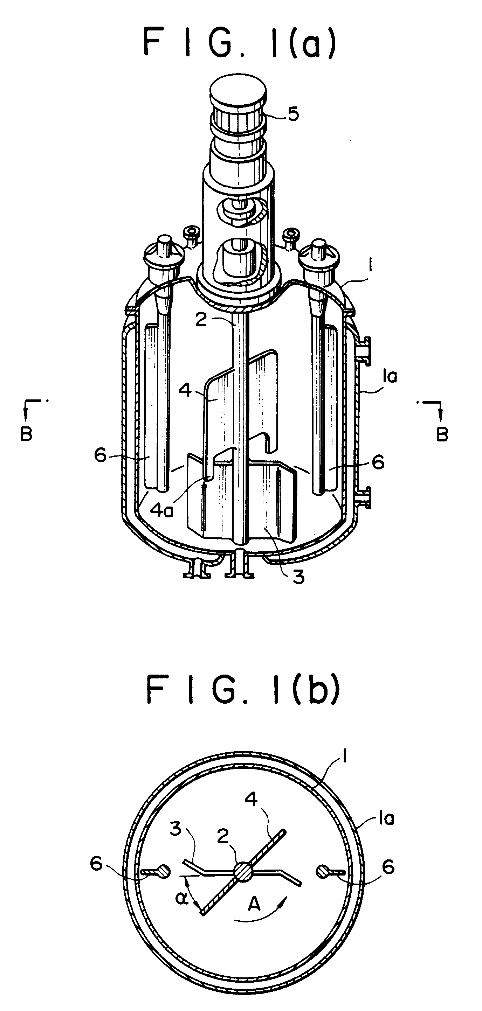

Fig. 1, shows a mixing apparatus of glass-lined type. This mixing apparatus has a vertical cylindrical tank 1 fitted with a jacket 1a for heat exchange around the outside wall. Two baffles 6 are vertically inserted from the top of the tank 1 at an equal pitch in close by the inside wall of this mixing tank. Baffles are not necessarily required for mixing of high viscous liquids.

A rotating shaft 2 is vertically installed at the center of the mixing tank 1 and is driven to be rotated by a drive unit 5 mounted at the center on the top of the mixing tank 1 in the direction indicated by the arrow A in view (b).

A lower-stage impeller 3 is a paddle impeller with the lower edge section formed along the curved surface of the bottom of the mixing tank 1, and with both outer side sections are retreated in opposite direction of rotation indicated by the arrow A in view (b). This lower stage impeller is mounted on the lower end portion of the rotating shaft 2 and close to the bottom surface of the mixing tank 1.

An upper-stage impeller 4 consists of a paddle impeller having nearly the same impeller diameter as the lower-stage impeller 3, fitted with strip-shaped fins 4a projecting out downward at the lower end part on both outer sides, and mounted on the rotating shaft 2 above the lower-stage impeller 3. This upper-stage impeller 4 is set at a crossing angle α of 45 degrees shown in view (b), advanced in the direction of rotation indicated by the arrow A, in relation to the lower-stage impeller 3. At the same time, the lower tip of the fins 4a on both outer sides thereof are located lower than a specific length Δh from the upper tip, being overlapped in the vertical direction with the lower-stage impeller 3.

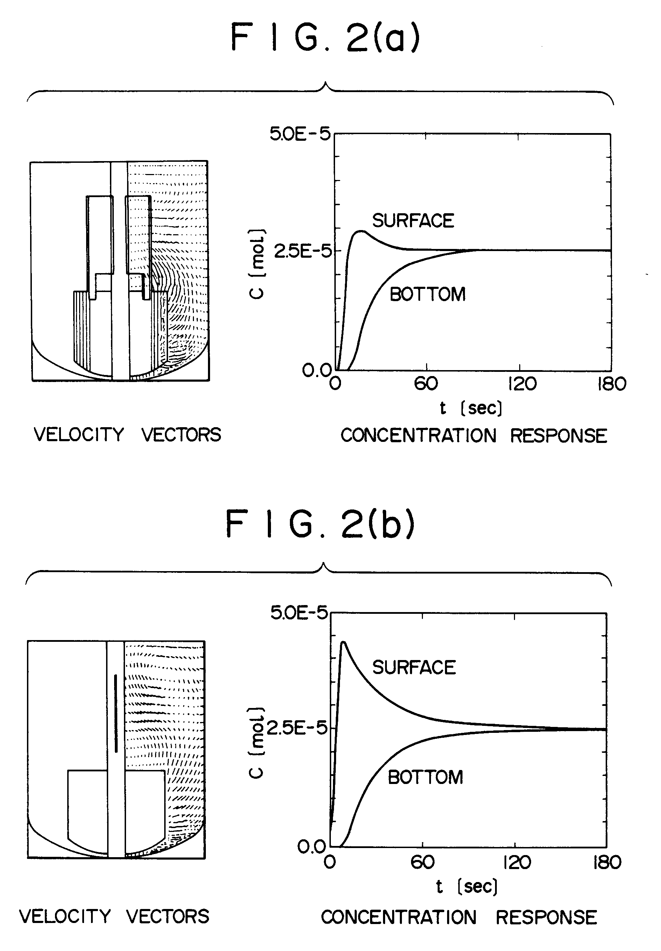

In order to confirm the effect of improvement on the mixing efficiency from medium- to high-viscosity ranges in the mixing apparatus of the above-described constitution according to the embodiment, numerical simulations were conducted both to determine the velocity vector of liquid and concentration response of the diffusion material in the liquid surface and bottom of the tank for the Reynolds number Re 11.7 in the laminar flow conditions. Numerical calculations were carried out under such common conditions that paddle impellers measuring 120 mm (0.6D) in impeller diameter d arranged vertically in two stages were used in the liquid depth H of 250 mm (1.25D) at the impeller speed of 2.08 l/s. Also, the length of overlap Δh with the lower-stage impeller of the upper-stage impeller fin section of the apparatus of the present embodiment was set at 0.05D. A result thereof is shown in Fig. 2.

Fig.2(a) shows the velocity vectors and the concentration response curves of the mixing apparatus according to the present embodiment, while Fig. 2(b) shows those of a mixing apparatus with the prior-art crossing angle as comparative example.

ln the mixing apparatus with the prior-art crossing angle, as shown in Fig.2(b), the flows of liquid caused by the upper- and lower-stage paddle impeller are linked but some concentration difference between the liquid surface and the tank bottom even after about 180 seconds exists, and this shows the imcomplete mixing. In the mixing apparatus of the present embodiment shown in Fig.2(a), however, the flows caused by the upper- and lower-stage impeller are well linked, and this result becomes more clear to see that the concentrations of the liquid at the surface and the tank bottom after about 90 seconds are the same, and this shows that the complete mixing is attained. Therefore, it has been confirmed that the mixing apparatus according to the present invention has an effect to largely reduce the mixing time as much as half or more as compared with the mixing apparatus with the prior-art crossing angle.

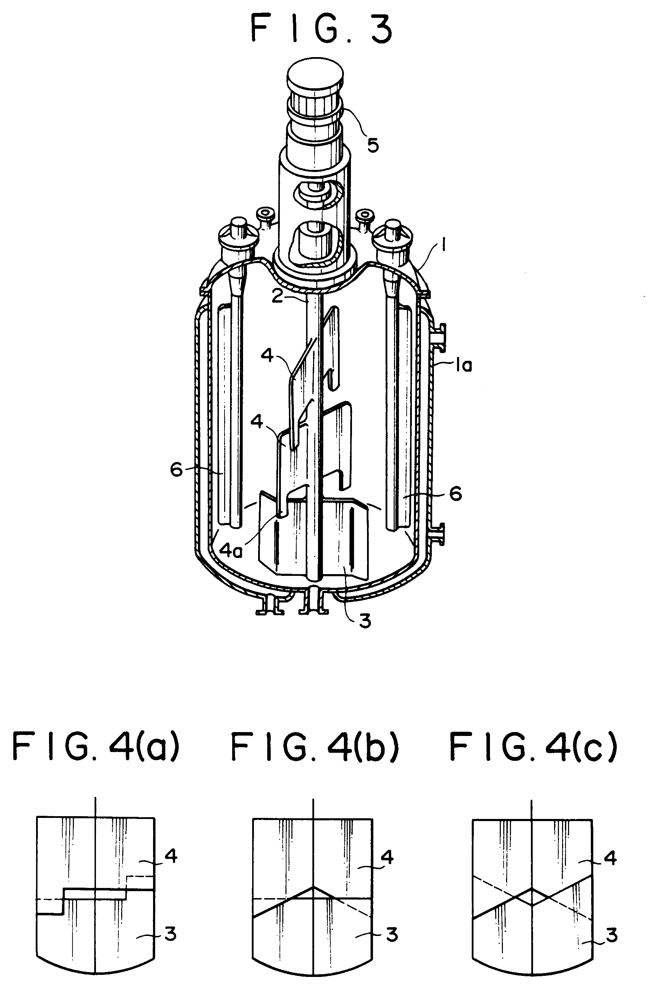

According to the mixing apparatus shown in Fig. 1, two mixing impellers, upper and lower, are adopted. This is merely one example, and therefore, it is to be understood that the present invention is not limited thereto but three paddle impellers arranged vertically as shown in Fig. 3 may be adopted. And further the number of the paddle impellers may be increased more than three in accordance with the size of the apparatus and the liquid depth.

In the mixing apparatus of Fig. 3, upper-stage impellers 4 fitted with fins 4a in the lower end portion on both outer sides are vertically mounted above the lower-stage impeller 3 in two stages on the rotating shaft 2 as the same shown in Fig.1. This impeller structure, therefore, is a three-stage impeller structure on the whole. The lower-stage impeller 3 and the two upper-stage impellers 4 are arranged 45 degrees apart from each other, and these two upper-stage impellers 4 are overlapped at the fin sections 4a in the vertical direction with an adjacent lower impeller.

By using the mixing impeller system in the present embodiment as described above, uniform mixing of the fluid in the whole tank is assured even if the liquid depth varies, and also the impeller structure is easily applicable to larger-size, larger-capacity mixing apparatus.

In the mixing apparatus shown in Figs. 1 to 3 the strip-shaped fins 4a are attached in the lower end part on both outer sides of the upper-stage impeller 4. The fins 4a are overlapped vertically with the other impeller positioned below to stabilize the linkage of flow between the upper and lower adjacent paddle impellers. lt should be noted that this is merely one example. Therefore, unless departing from the true spirit and scope of the present invention in which the upper and lower adjacent paddle impellers are overlapped in the vertical direction at least at the outer edge part, it is possible to overlap the upper- and lower-stage impellers by providing for example strip-shaped fins on one outer edge part of the lower-stage impeller 3 and the upper-stage impeller 4 as shown in Fig. 4 (a), or fins projecting in a form of fish tail in the lower end part on both outer aides of the upper-stage impellers 4 as shown in Fig. 4 (b), or fins projecting in a form of fish tail in both outer edge parts of the lower-stage impeller 3 and the upper-stage impeller 4 as shown in Fig. 4 (c).

Furthermore, in the mixing apparatus shown in Figs. 1 to 3, the lowermost impeller is retreated for the purpose of increasing the discharge force in the lower part of the mixing tank, and this leads to the applicability to various fluid viscosity and increasing power efficiency. This retreated impeller, however, is not necessarily required. Since the lowermost paddle impellers having a larger span than the other impellers positioned in the upper stage may be usable for the same purpose.

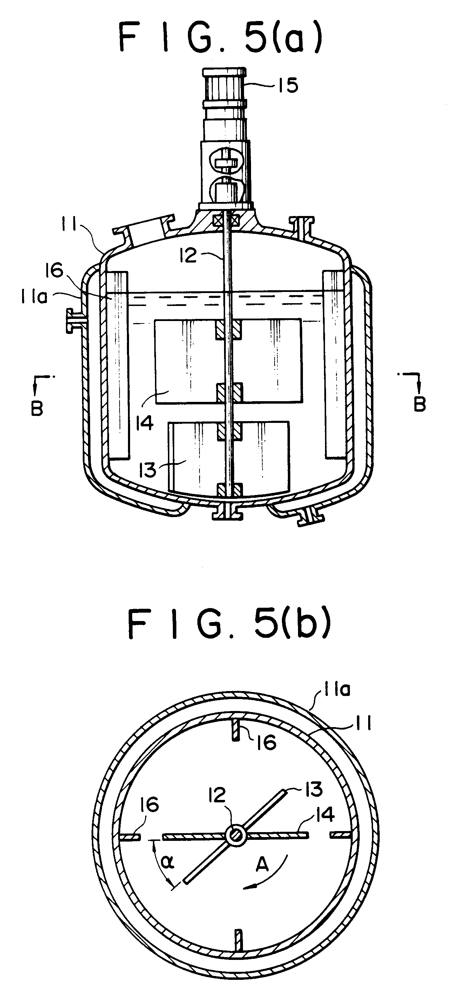

In Fig. 5, a mixing tank 11 is a vertical cylindrical tank fitted with a jacket 11a for heat exchange on the outer wall. On the inner peripheral surface of this mixing tank 11, four baffle places 16 are vertically installed at an equal pitch in the circumferential direction along the axial direction.

A rotating shaft 12 is vertically mounted at the center in the mixing tank 11 and driven to rotate in the direction indicated by the arrow A in Fig. 5(b) by a drive unit 15 mounted at the center on the top of the mixing tank 11.

Upper- and lower-stage impellers 14 and 13 are paddle impellers of the same impeller diameter d and the same impeller height h, and they are mounted vertically lined on the rotating shaft with a specific clearance provided therebetween. The lower edge section of the lower-stage impeller 13 is formed along the curvature of the bottom of the mixing tank 11 so that the impeller may be installed close to the bottom surface of the mixing tang 11. While the upper-stage impeller is set at the crossing angle α less than 90 degrees ahead of the lower-stage impeller in the direction of rotation by the arrow A shown in Fig. 5(b), and at an impeller clearance L from the lower-stage impeller 13. The clearance L is set at 20% or less of the inside diameter D of the mixing tank 11.

In the following, a concrete example of mixing and agitation by use of the mixing apparatus of the present embodiments having the above-described constitution will be described.

There were prepared three kinds of mixing apparatus of the above-described constitution of the crossing angle α of the upper- and lower-stage impellers 14 and 13 set 45 degrees, 60 degrees and 75 degrees including the mixing tank 11 of 200 mm in inside diameter D, and the upper- and lower-stage impellers 14 and 13 measuring 120 mm (0.6D) in blade diameter d and 70 mm (0.35D) in impeller height h and mounted with an impeller clearance L of 20 mm (O.1D) . Also, a mixing apparatus which was of the same constitution as the present embodiment except the prior-art crossing angle α of 90 degrees and impeller clearance L of 60 mm (0.3D) of the upper- and lower-stage impellers was prepared for the comparision.

Comparative investigations were conducted, for comparison under the same conditions, of the time required for complete mixing of liquids by mixing and agitating the liquids whose viscosity µ = 5Pa·s and density ρ = 1400 kg/m³ at the impeller speed of 125 rpm.

As a result, according to a comparative example, the time required for complete mixing of liquids was 150 seconds, while that of the present embodiment was 104 seconds in the case of the impellers mounted at the crossing angle of 45 degrees, 102 seconds at the crossing angle of 60 degrees and 114 seconds at the crossing angle of 75 degrees. When compared with the prior-art examples, therefore, the present embodiment could largely improve the liquid mixing and agitating efficiency by about 25% to 30%, therefore it shows an excellent mixing effect.

In the present embodiment, the impeller clearance L between the upper- and lower-stage impellers was 20 mm. However, this is merely one example and the clearance may be set to any length under 20% of the inside diameter D of the mixing tank.

The increase of the overall impeller height correspondingly to the liquid depth is necessary to reduce this clearance as described above in [Description of the Prior Art]. However,this includes such a problem as an increase in power consumption. This impeller clearance, therefore, will be selected less than 20% (preferably around 10%) of the inside diameter of the mixing tank from the respect of the size of the apparatus and economy.

Furthermore, in the present embodiment, the both the upper- and lower-stage impellers used are paddle impellers of the same height and diameter. This, however, is merely one example and the lower-stage impeller may be retreated as in the case of the first embodiment, or may be a larger-span impeller than the upper-stage impeller for the purpose of smooth and effective linkage of flows of the entire liquid in the tank by increasing the discharge for in the lower part of the tank.

According to the present embodiment, the mixing impeller structure is a vertically arranged two-stage impeller structure. The evaluation and explanation of the effect of the constitution of the present invention becomes easy by adopting this impeller structure. It is, therefore, to be noted that, for the purpose of similarly improving the mixing and agitating efficiency, a multistage mixing impeller structure using more than two stages of mixing impeller may be adopted in accordance with the size of the apparatus and liquid depth.

As has been described above, the mixing apparatus according to the present invention has the mixing impeller structure that multiple stages of paddle impellers are vertically arranged in the optimum position for mixing, so that flows caused by appropriate pressure gradient between the paddle impellers will be formed and flow patterns are smoothly linked throughout the interior of the mixing tank, thereby largely improving the fluid mixing efficiency under mixing operation conditions ranging from turbulent flow to laminar flow regions.

## Claims

1. Mixing apparatus, comprising a vertical cylindrical tank (1; 11) and a rotating shaft (2; 12) vertically installed at the center of said tank, said shaft supporting a plurality of stages of impellers (3, 4; 13, 14),
**characterized in that**
the impellers are paddle impellers (3, 4; 13, 14), each of which comprises two blades vertically fixed so as to symmetrically extend radially from said shaft (2; 12), each of said blades having a vertical dimension which is at least as great as the horizontal dimension thereof, the lowest stage impeller of the impellers having both blades disposed in proximity with the bottom of said tank, each upper stage impeller (4; 14) of the impellers having an impeller diameter substantially the same as or smaller than the next lower stage impeller (3; 13) and being placed on said shaft (2; 12), so as to form a vertical space from the next impeller of not more than 20% of the diameter of the tank (1; 11), each upper stage impeller being set at a crossing angle of between 45 and 75 degrees as measured around said shaft in the direction of impeller roation from the next lower stage impeller, a space being defined between the wall of the tank (1; 11) and the peripheral edge of the impellers for the insertion of baffles (6).

2. Apparatus as claimed in claim 1, characterized in that the diameter of the impellers is 60% of the inner diameter (D) of the tank (1; 11).

3. Apparatus as claimed in claim 1 or 2, characterized in that the lowest stage impeller (3; 14) has a radial outer edge part which extends rearward with respect to the direction of impeller rotation.

4. Apparatus as claimed in one of claims 1 to 3, characterized in that at least one pair of vertically mutually adjacent stage impellers (3, 4; 13, 14) partly overlap each other in vertical direction at the blade edge part furthest from said shaft (2; 12).

5. Apparatus as claimed in one of claims 1 to 4, characterized in that strip-type fins (4a) are attached to the lower end part on both outer sides of the upper paddle impellers (4) projecting downward to overlap the lower paddle impellers (3).

## Patentansprüche

1. Mischvorrichtung, mit einem vertikalen zylindrischen Behälter (1; 11) und einer drehbaren Welle (2; 12), die vertikal in der Mitte des Behälters eingebaut ist, wobei die Welle eine Vielzahl von Stufen aus Rührflügeln (3,4; 13, 14) trägt,
**dadurch gekennzeichnet, daß**
die Rührflügel Schaufel-Rührflügel (3, 4; 13, 14) sind, wobei jeder zwei Blätter aufweist, die vertikal so befestigt sind, daß sie sich symmetrisch von der Welle (2; 12) erstrecken, wobei jedes der Blätter eine vertikale Abmessung hat, die wenigstens so groß ist wie ihre horizontale Abmessung, wobei bei den Rührflügeln der untersten Stufe der Rührflügel beide Blätter in Bodennähe des Behälters angeordnet sind, wobei jeder Rührflügel (4; 14) einer oberen Stufe der Rührflügel einen Rührflügeldurchmesser hat, der im wesentlichen derselbe wie oder kleiner als der des nächst unteren Stufen-Rührflügels (3; 13) ist, und so an der Welle (2; 12) angeordnet ist, daß ein vertikaler Freiraum vom nächsten Rührflügel von nicht mehr als 20% des Durchmessers des Behälters (1;11) gebildet wird, wobei jeder Rührflügel einer oberen Stufe unter einem Schnittwinkel zwischen 45 und 75 Grad, gemessen um die Welle in die Drehrichtung der Rührflügel, von dem Rührflügel der nächst unteren Stufe eingestellt ist, wobei ein Freiraum zwischen der Wand des Behälters (1; 11) und der Außenumfangskante der Rührflügel zum Einsetzen von Prallplatten (6) definiert ist.

2. Vorrichtung nach Anspruch 1, dadurch gekennzeichnet, daß der Durchmesser der Rührflügel 60% des Innendurchmessers (D) des Behälters (1; 11) beträgt.

3. Vorrichtung nach Anspruch 1 oder 2, dadurch gekennzeichnet, daß der Rührflügel (3; 14) der untersten Stufe einen radial äußeren Kantenteil hat, der sich rückwärts in bezug auf die Richtung der Rührflügeldrehung erstreckt.

4. Vorrichtung nach einem der Ansprüche 1 bis 3, dadurch gekennzeichnet, daß wenigstens ein Paar Rührflügel (3, 4; 13, 14) vertikal wechselseitig benachbarter Stufen einander teilweise in vertikaler Richtung an dem Blätterkantenteil, der am weitesten von der Welle (2; 12) entfernt ist, überlappen.

5. Vorrichtung nach einem der Ansprüche 1 bis 4, dadurch gekennzeichnet, daß streifenähnliche Leitflächen (4a) an dem Teil am unteren Ende auf beiden Außenseite der oberen Schaufel-Rührflügel (4) befestigt sind, die sich nach unten erstrecken, um die unteren Schaufel-Rührflügel (3) zu überlappen.

## Revendications

1. Appareil à mélanger, comprenant un cylindrique réservoir (1; 11) vertical et un arbre (2; 12) rotatif, verticalement installé au centre dudit réservoir, ledit arbre supportant une multiplicité d'étages des ailes agitatrices (3, 4; 13, 14),
**caractérisé en ce que**
les ailes agitatrices sont des ailes agitatrices à pales (3, 4; 13, 14), chacune comprenant deux pelles verticalement fixées de manière à symétriquement s'étendant radialement dudit arbre (2; 12), chacune desdites pelles ayant une dimension verticale au moins aussi grande que sa dimension horizontale, les deux pelles de l'aile agitatrice de l'étage le plus bas desdites ailes agitatrices étant disposées à proximité du fond dudit réservoir, chacune aile agitatrice (4; 14) d'un étage plus élevé des ailes agitatrices ayant un diamètre d'aile agitatrice essentiellement le même ou moins que celui de l'aile agitatrice (3; 13) de l'étage plus bas le plus proche et étant placée sur ledit arbre (2; 12) de manière à former un espace vertical de l'aile agitatrice la plus proche qui est non plus que 20% du diamètre du réservoir (1; 11), chacune aile agitatrice d'un étage plus élevé étant établie à un angle d'intersection entre 45 et 75 degrés, mésuré autour dudit arbre dans le sens de rotation des ailes agitatrices à partir de l'aile agitatrice de l'étage plus bas la plus proche, un espace défini entre le paroi du réservoir (1; 11) et l'arête périphérique des ailes agitatrices pour insérer des plaques de rébondissement (6).

2. Appareil selon la revendication 1, caractérisé en ce que le diamètre des ailes agitatrices est 60% du diamètre intérieur (D) du réservoir (1; 11).

3. Appareil selon la revendication 1 ou 2, caractérisé en ce que l'aile agitatrice (3; 14) de l'étage le plus bas a une partie de l'arête extérieure s'étendant à rebours en regard du sens de rotation des ailes agitatrices.

4. Appareil selon l'une des revendications 1 à 3, caractérisé en ce que au moins un pair d'ailes agitatrices (3, 4; 13, 14) d'étage mutuellement avoisinant en sens vertical se recouvrent partiellement en direction verticale à la partie de l'arête de pelle la plus éloignée dudit arbre (2; 12).

5. Appareil selon l'une des revendications 1 à 4, caractérisé en ce que des empennages (4a) du type bande sont attachés à la partie du bout bas des ailes agitatrices (4) à pales élevées aux deux côtés extérieurs, saillant en bas à recouvrer les ailes agitatrices (3) à pales basses.
